# EUROPEAN PATENT SPECIFICATION

(11) **EP 2 858 926 B1**
(45) Date of publication and mention of the grant of the patent: **31.05.2017**
(21) Application number: 13800455.1
(22) Date of filing: 06.06.2013
(51) Int. Cl.: B65F 5/00, B65G 53/04, B08B 9/053, F16L 55/26, B65G 53/52

(54) **METHOD FOR CLEANING THE PIPING OF A PNEUMATIC MATERIALS HANDLING SYSTEM, AND A CLEANING APPARATUS, AND A SYSTEM**
VERFAHREN ZUR REINIGUNG DER LEITUNGEN EINES PNEUMATISCHEN MATERIALFÖRDERSYSTEMS SOWIE REINIGUNGSVORRICHTUNG UND SYSTEM
PROCÉDÉ DE NETTOYAGE DU TUYAU D'UN SYSTÈME DE TRAITEMENT DE MATÉRIAU PNEUMATIQUE, ET APPAREIL DE NETTOYAGE, ET SYSTÈME

(30) Priority: 07.06.2012 FI 20125624
(43) Date of publication of application: 15.04.2015
(73) Proprietor: Maricap OY, 01450 Vantaa (FI)
(72) Inventor: SUNDHOLM, Göran, FI-04310 Tuusula (FI)
(74) Representative: Heinänen Oy Patent Agency
(86) International application number: PCT/FI2013/050614
(87) International publication number: WO 2013/182753

(56) References cited:
- EP-A1- 1 362 641
- WO-A1-2013/079695
- DE-C1- 10 013 977
- FR-A1- 2 891 478
- JP-A- H05 255 261
- JP-A- H05 255 261
- JP-A- S54 119 765
- JP-A- S54 119 765
- JP-A- 2003 284 989
- JP-A- 2003 284 989
- KR-B1- 100 661 150
- KR-B1- 100 661 150
- KR-B1- 100 980 201
- KR-B1- 100 980 201

## Description

### Background of the invention

The object of the invention is a method as defined in the preamble of claim 1.

The object of the invention is also a cleaning apparatus as defined in the preamble of claim 14.

The invention also relates to a system according to the preamble of claim 23.

The invention relates generally to materials handling systems, such as partial-vacuum transporting systems, more particularly to the collection and conveying of wastes, such as to the conveying of household wastes. The invention relates more particularly to the cleaning of the material conveying pipes of pneumatic material conveying systems, more particularly of wastes conveying systems. A method for cleaning the conveying pipe of a pneumatic material conveying system, and a corresponding apparatus and system according to the preambles of claims 1, 14 and 23 are known from JP54-119765. On the other hand, KR10-0980201 and KR10-0661150 show respective cleaning pigs for a pneumatic waste conveying system, comprising a passage hole through the cleaning pigs.

Systems wherein wastes are conveyed in piping by means of an air current produced by a pressure difference or suction are known in the art. In these, wastes are conveyed long distances in the piping. It is typical to these systems that a partial-vacuum apparatus is used to achieve a pressure difference, in which apparatus negative pressure is achieved in the conveying pipe with partial-vacuum generators, such as with vacuum pumps or with an ejector apparatus. A conveying pipe typically comprises at least one valve means, by opening and closing which the replacement air coming into the conveying pipe is regulated. Input points at the input end of the material are used in the systems, from which input points the material, such as wastes, is conveyed into the system. The system can also comprise refuse chutes, into which material, such as waste material, is fed and from which the material to be conveyed is conveyed into a conveying pipe by opening a discharge valve means, in which case, by means of the suction effect achieved by the aid of the negative pressure acting in the conveying pipe and also by means of the surrounding air pressure acting via the refuse chute, material such as e.g. waste material packed into bags, is conveyed from the refuse chute into the conveying pipe. Known from publication WO2009080885 A1 is a method and an apparatus for cleaning conveying piping that can be connected into a circuit. In addition to the solution of the publication, those sections of piping in the system that cannot be connected into a circuit must also be cleaned. JP S54119765 A discloses an in-pipe travelling body which can travel through a pipe to clean the interior of the pipe. WO 2013/079695 A1 is an intermediate document disclosing a pig for cleaning of a pipeline.

The aim of the present invention is to achieve an entirely new type of solution for cleaning at least a part of the conveying piping of a pneumatic pipe transport system and/or for conveying material that is in the piping, by means of which solution the drawbacks of prior art solutions are avoided. Another aim of the invention is to achieve a solution applicable to keeping clean the conveying pipes of partial-vacuum conveying systems, by means of which solution the cleaning event can be enhanced. Yet another aim of the invention is to achieve a solution for cleaning the branching pipe sections of the conveying piping.

### Brief description of the invention

The invention is based on a concept wherein a cleaning means arranged in a conveying pipe section for cleaning the conveying pipe section is moved in the conveying pipe by the aid of suction, blowing and/or a pressure difference in at least a first direction, and the distance of movement is limited or guided with transmission means, such as with a wire means, cable means or line means connected to a reel, connected to the cleaning means.

The method according to the invention is mainly characterized by what is stated in the characterization part of claim 1.

The method according to the invention is also characterized by what is stated in claims 2 - 13.

The cleaning apparatus according to the invention is mainly characterized by what is stated in the characterization part of claim 14.

The apparatus according to the invention is also characterized by what is stated in claims 15 - 22.
The system according to the invention is characterized by what is stated in claim 23.

The system according to the invention is also characterized by what is stated in claims 24 - 33.

The solution according to the invention has a number of important advantages. With the solution according to the invention, the branching sections of conveying piping can be cleaned. With the solution according to the invention the cleaning means returns back to its starting location. By using a transmission means, such as a wire, a line, a cable or corresponding, said transmission means to be arranged on a reel are connected to the cleaning means, an effective and operationally reliable solution is achieved for cleaning pipe sections and for conveying material from the pipe section being treated. When moving the cleaning means in a first direction mainly by the aid of suction, blowing and/or a pressure difference, the cleaning means is kept connected to the transmission means, in which case the distance of travel of the cleaning means in the piping can, if necessary, be limited. The movement speed of the cleaning means can, if necessary, be braked with the transmission means. By using a brake device, the winding out of the transmission means can be braked. By the aid of the transmission means the movement distance of the cleaning means can therefore be limited and a return movement of the cleaning means can be achieved, partly or wholly, in the second direction, preferably back to the starting position. With the transmission means the movement of the cleaning means can also be guided to travel in the desired direction, e.g. in a Y-branch of the piping. By additionally using a pump device connected to blow or to suck in a pipe section, the movement of the cleaning means can be boosted. The cleaning means can consequently be effectively moved in a first direction, e.g. using the suction of a partial-vacuum generator, and back with blowing and can alternatively be pulled back with the transmission means alone or in addition to the blowing. By conducting cleaning liquid into the pipe section in connection with the cleaning means, the cleaning can be further enhanced. By using cleaning means connected together, the cleaning can be further enhanced and space can be obtained for the cleaning liquid. The combination of cleaning means and a cleaning liquid space can be effectively moved for cleaning the pipe section. By connecting a number of devices according to the invention in the conveying piping of a material conveying system, the pipe sections of the system can be cleaned and the material can be conveyed towards a separating device in a desired, more particularly in a programmed, sequence. The cleaning means can be used as a shut-off means in the conveying piping. By using a cleaning means in which, for its part, there are replacement air ducts, replacement air can be conducted into the conveying piping through the cleaning means. The solution according to the invention can be used in material conveying systems, more particularly in conveying systems for wastes. The solution according to the invention is also suited to the conveying systems and food wastes of the food industry. The solution according to the invention improves the result of sorting as the piping is cleaned in connection with, or after, the conveying of the different varieties to be conveyed. A good degree of cleaning can in this case be achieved for the different extensions. By means of the solution according to the invention energy can be saved, as the friction between the material to be transported and the wall of a cleaned conveying pipe remains low. The solution according to the invention improves the hygiene problems and odor problems of material pipe transport systems. The solution according to the invention is suited for use in a very wide size range of conveying pipings, typically for pipe diameters of 50 - 500 mm.

### Brief description of the figures

In the following, the invention will be described in more detail by the aid of an embodiment with reference to the attached drawing, wherein
Fig. 1 presents a simplified view of an illustrative example of a pneumatic material conveying system,
Fig. 2 presents a simplified view of an illustrative example of a pneumatic material conveying system, in a second phase,
Fig. 3a presents a sectioned view of a cleaning means not part of the present invention,
Fig. 3b presents one cleaning means of an embodiment of the invention, as seen from the end,
Fig. 3c presents the cleaning means of Fig. 3b when sectioned,
Fig. 3d presents one cleaning means according to an embodiment of the invention,
Fig. 3e further presents one cleaning means not part of the present invention,
Fig. 4 presents a diagram of an illustrative example of a pneumatic material conveying system,
Fig. 5 presents a diagram of an illustrative example of a pneumatic material conveying system,
Fig. 6 presents a diagram of an illustrative example of a pneumatic material conveying system,
Fig. 7 presents a diagram of an illustrative example of a pneumatic material conveying system,
Fig. 8 presents an embodiment of a solution not according to the present invention, in a first phase,
Fig. 9 presents an embodiment of the solution not according to the present invention, in a second phase,
Fig. 10 presents an embodiment of the solution not according to the present invention, in a third phase,
Fig. 11 presents one embodiment of the system according to the invention,
Fig. 12 presents another embodiment of the solution according to the invention, and
Figs. 13 - 19 present the operation in different phases of an embodiment of the solution according to the invention.

### Detailed description of the invention

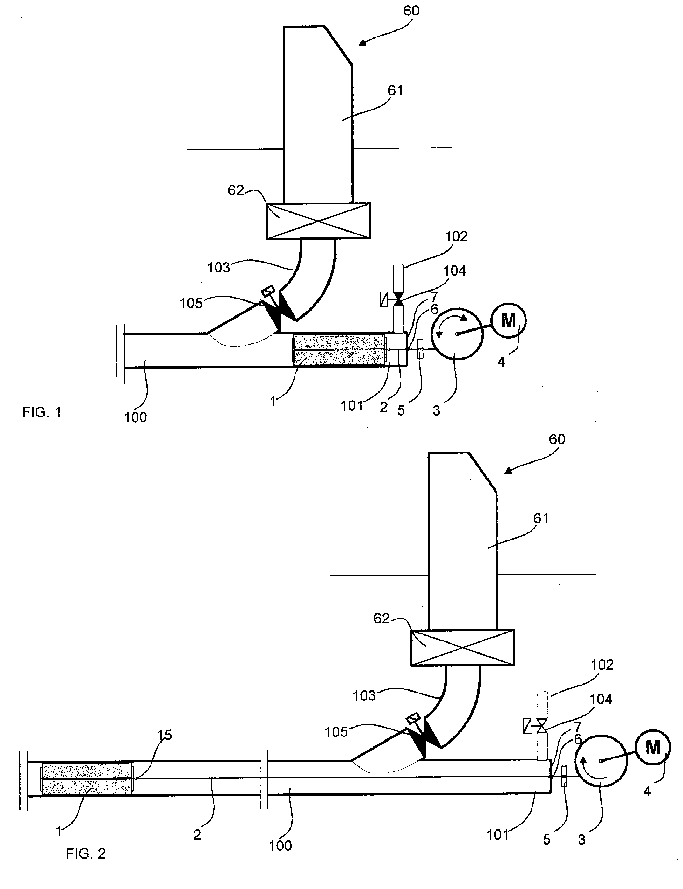

Figs. 1 and 2 present one simplified illustrative example of a pneumatic material conveying system. The figure shows a part of a conveying pipe 100 of a pneumatic material conveying system as well as an input point 60, which is connected with an input pipe 103 to the conveying pipe 100. A valve means 105 is arranged between the input pipe 103 and the conveying pipe 100. The input point comprises a feed-in container 61 and possibly also a material shaper 62, e.g. a rotary shaper. The material, such as household waste, waste paper, cardboard or other waste, is fed e.g. into a feed-in container 61 of an input point, from where it is from time to time conducted onwards into conveying piping 100. The material to be handled is shaped and compacted in the material shaper 62 and after handling is conducted via the input pipe 103 into the conveying piping 100 by means of the suction and/or a pressure difference produced by e.g. the drive devices (not presented) of the pneumatic pipe transport system.

A pipe part 101 is arranged into connection with the conveying piping 100, into connection with which pipe part cleaning apparatuses 1, 2, 3, 4, 5 are arranged. The cleaning apparatus comprises a cleaning means 1, which is arranged in the figure in a pipe part 101, which in the embodiment of the figure is an extension of a conveying pipe section 100 of the conveying piping.

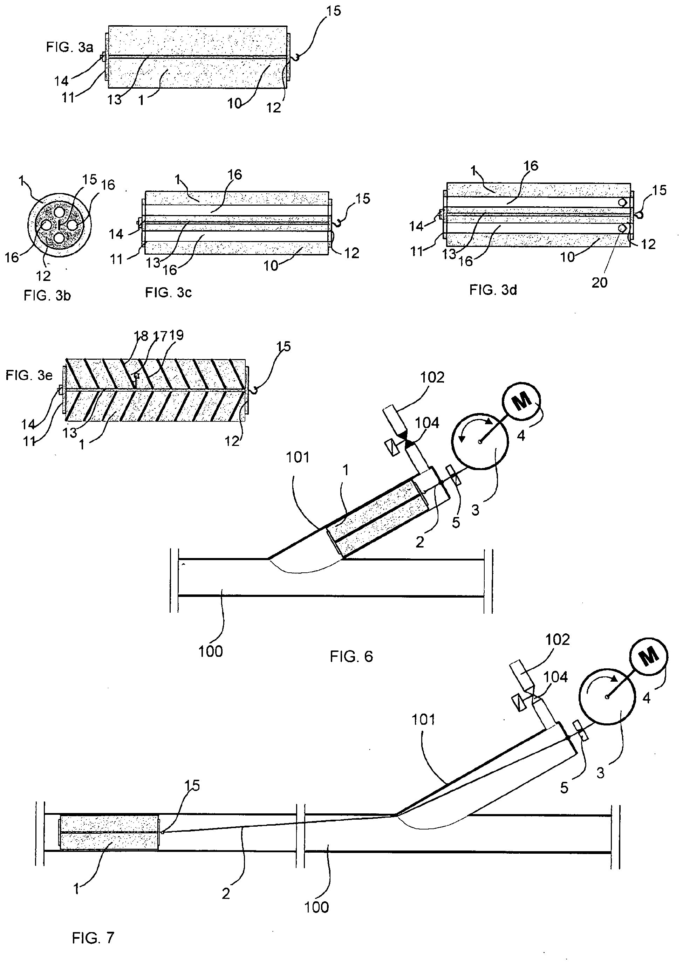

The cleaning means 1 is configured in terms of its shape to be according to the cross-sectional shape of the inner surface of the pipe so that the outer wall of the cleaning means 1 settles against the inner surface of the pipe section. One embodiment of a cleaning means 1 not part of the present invention is presented in more detail in Fig. 3a. The cleaning means 1 comprises an actual cleaning means part 10 as well as the support parts 11, 12, 13, 14 of it. In the embodiment of Fig. 3a, the support parts of the cleaning means comprise a first butt end part 11, a second butt end part 12, and also a coupling part 13 connecting the first and second butt end part. The coupling part 13 extends through the cleaning means part 10. The coupling part 13 is preferably flexible, in which case bends can be moved through with it. According to one embodiment the cleaning means part 10 is of flexible material. The cleaning part 10 is typically a replaceable part. The first butt end part 11 is fixed with a fixing means, such as with a nut, to the fixing part. Threads (not presented) are formed on the coupling part 13 at least on the end on the side of the first butt end part 11, onto which threads the counterthreads of the nut 14 fit. A fixing point 15 for the transmission means 2 of the moving device, e.g. for a wire, a line, a cable or a corresponding transmission means, is arranged on at least one of the butt end parts. In the embodiment of Fig. 3a the fixing point 15 is a hook.

Figs. 3b and 3c present one embodiment of the cleaning means of the invention, in which at least a replacement air duct 16 extends through the cleaning means 1. There are a number of replacement air ducts 16 in the figure. In the embodiment of the cleaning means of the figure there are four replacement air ducts 16. The embodiment of Fig. 3c can be used e.g. for detaching material that is on the surface of the pipe. In this case replacement air is able to go through the cleaning means 1 from the first side of it to the second along the ducts 16. The material possibly detached from the walls of the pipe by the cleaning means or the other material in the pipe is displaced onwards in the piping e.g. along with the suction or transporting air flow produced by the partial-vacuum generator. Fig. 3d shows an embodiment of a cleaning means, wherein a non-return valve 20 is arranged in the replacement air duct 16, in which case replacement air is able to go through the duct in only one direction. The non-return valve 20 can be e.g. a rubber flap.

Fig. 3e presents yet another embodiment of a cleaning means 1 not part of the invention, wherein the cleaning means comprises a number of cleaning elements 17, the walls 18, 19 of which are inclined in Fig. 3e at an angle of alpha α forwards from the orthogonal direction. In this case when moving the cleaning means in the direction towards which the cleaning elements are inclined (in Fig. 3e to the left), in which case the cleaning elements effectively scrape the inner surface of the pipe, and when the cleaning means is displaced back (in Fig. 3e to the right), the cleaning elements bend inwards facilitating the movement.

The cleaning apparatus comprises a moving apparatus for the cleaning means 1, which moving apparatus comprises in the embodiment of Fig. 1 a transmission means 2, which is wound onto a reel 3, which can be rotated around the reel axis with a drive device 4. The transmission means 2, such as a wire, line, cable, *et cetera*, can therefore be released from the reel 3 when the cleaning means 1 moves in the conveying piping in a direction away from the reel. For example, from the position of Fig. 1 into the position of Fig. 2. In this case the reel 3 rotates around the reel axis in a first direction. The reel can be e.g. such that e.g. 100-200m of e.g. 1 mm cable fits onto it. One example of this type of reel is e.g. a large fishing rod reel. The drive device 4 of the reel 3 can be e.g. manually, electrically, pneumatically or hydraulically operated. The movement of the cleaning means 1 in the conveying pipe 100 can be slowed down with a brake device 5. The brake device can preferably be in/on the reel or in the drive device 4. In the embodiment of the figures for the sake of clarity, the brake device 5 is marked to act on the transmission means 2. In the figure the brake device 5 is arranged between the reel 3 and the end of the pipe section 101. An aperture 7 is formed in the butt end wall 7 of the pipe section 101, through which aperture the transmission means 2 is led into the pipe part 101. The brake device 5 preferably brakes the speed of the cleaning means 1 when the cleaning means 1 moves away from the first position, i.e. the starting position (from the position of Fig. 1 towards the position of Fig. 2). In this case the cleaning result improves compared with a situation in which the cleaning means would be allowed to move freely along with the transporting air current produced by the suction of a partial-vacuum generator. With the length of movement of the transmission means 2 the movement distance of the cleaning means 1 in the conveying piping can be limited. When the movement distance of the cleaning means, i.e. the cleaning section, has been completed, the reel 3 is rotated around the reel axis with the drive device 4, in which case when the transmission means 2 winds onto the reel 3 the cleaning means 1 is pulled along with the transmission means 2 back towards its starting position (i.e. the position of Fig. 1). The movement backwards can also be performed with just the pressure difference (such as blowing) produced by a partial-vacuum generator or fan of the conveying system or together with the moving device 3, 4. In this case the transmission means 2 is wound with the reel 3 out of the pipe section.

In Figs. 1 and 2 a replacement air duct 102 is additionally arranged to the butt end area of the pipe section 101, into the space between the butt end 7 of the pipe section 101 and the starting position (Fig. 1) of the cleaning means 1. A valve means 104 is in the replacement air duct 102. The replacement air valve 104 of the replacement air duct is open when the cleaning means 1 is moved in the piping.

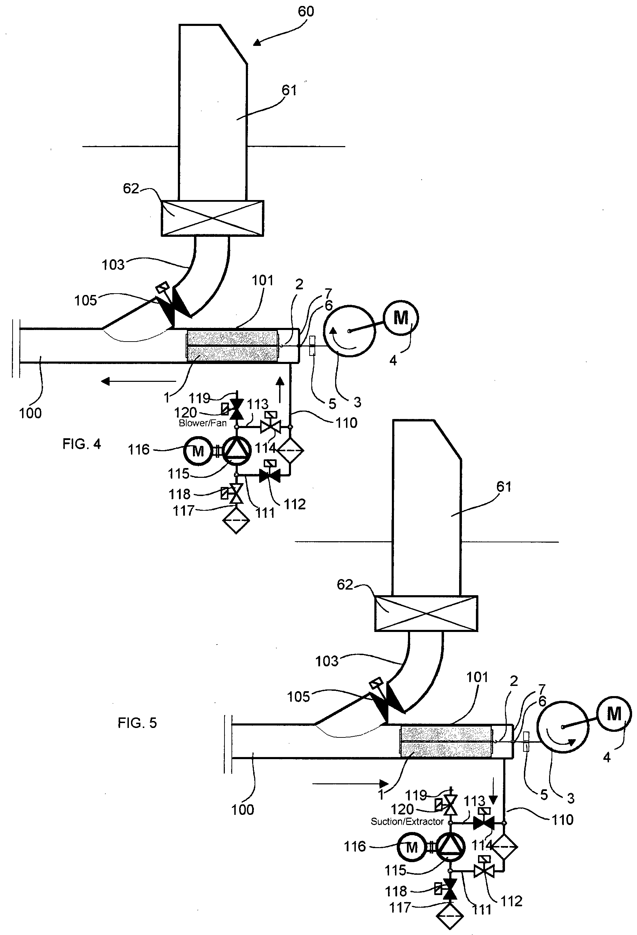

Figs. 4 and 5 present a simplified view of an illustrative example wherein a pump apparatus is arranged to produce positive pressure or negative pressure in the butt end area of the pipe section, in the space between the cleaning means 1 and the butt end 7 of the pipe section. This boosts the movement of the cleaning means 1 in the piping. In the situation of Fig. 4 it is endeavored to move the cleaning means 1 away from the starting position. The direction of movement is marked in the figure with an arrow. Also the direction of rotation of the reel 3 is marked in the figure with an arrow. In this situation the pump device 115, which is driven with a drive device 116, is connected from the pressure side, i.e. from the blowing side, to blow along the ducts 113, 116 into the space between butt end 7 of the pipe section 101 and the cleaning means 1. The valve means 114 in the duct 113 is in this case open. The suction side of the pump 115 is connected to the suction air duct 117, the valve 118 of which is open. When the blowing side of the pump 115 is connected in the manner presented by Fig. 4, movement of the cleaning means 1 away from the starting position is achieved or at least boosted.

In the situation of Fig. 5 it is endeavored to move the cleaning means towards the starting position. The direction of movement is marked in Fig. 5 with an arrow. Also the direction of rotation of the reel 3 is marked in the figure with an arrow. In this situation the pump device 115, which is driven with the drive device 116, is connected from the suction side along the ducts 111, 116 into the space between butt end 7 of the pipe section 101 and the cleaning means 1. The valve 112 in the duct 111 is in this case open. The valve of the duct 117 is closed. Correspondingly, the valve 114 of the duct 113 is closed. The blowing side of the pump is connected to blow into the exhaust duct 119, the valve 120 of which is open. The suction to be achieved with the pump device 115 achieves, or at least boosts, the movement of the cleaning means 1 towards the starting position.

Figs. 6 and 7 present a simplified view of an illustrative example wherein the pipe section 101 is a Y-branch of the conveying piping 100, which branch forms an angle with the conveying pipe 100. When it is desired to clean the conveying pipe section 100, the suction side of the partial-vacuum generator (not presented) of the pneumatic conveying system is connected to the conveying pipe 100, in which case when opening the replacement air valve 104 in the replacement air duct 102, the cleaning means moves from the position of Fig. 6 into the situation of Fig. 7, and possibly further onwards in the piping. Depending e.g. on the length of the transmission means 2 (e.g. of the line, wire or cable), which limits the movement of the cleaning means. When the desired cleaning movement has been brought about, the cleaning means is wound along with the transmission means 2 back to the starting position (Fig. 6). Here, the cleaning means can consequently be guided with the transmission means 2 into the correct branch of the pipe section 101, although the air current of the pipe section 100 would also try to take the cleaning means past the branch.

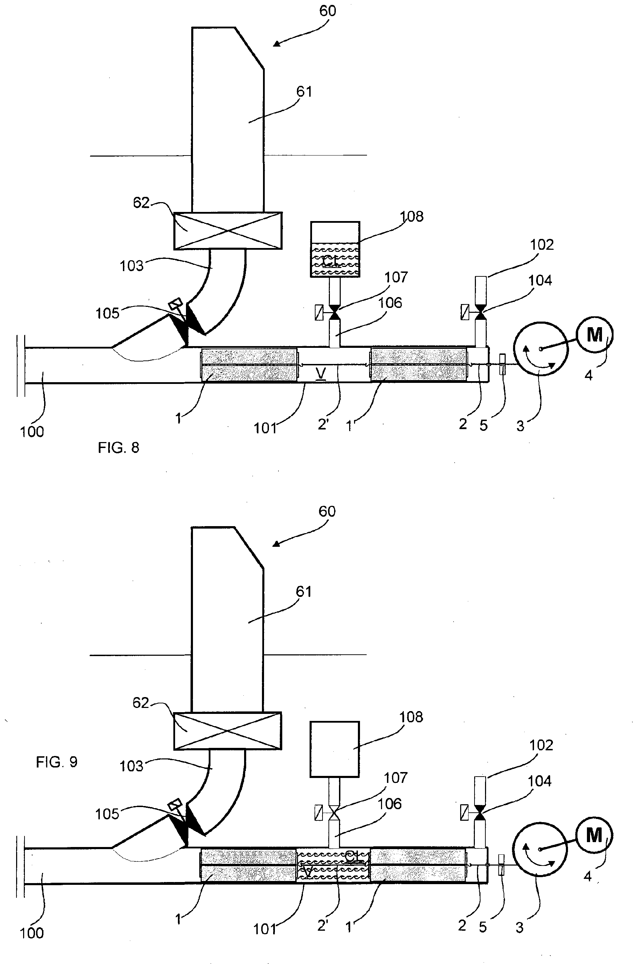

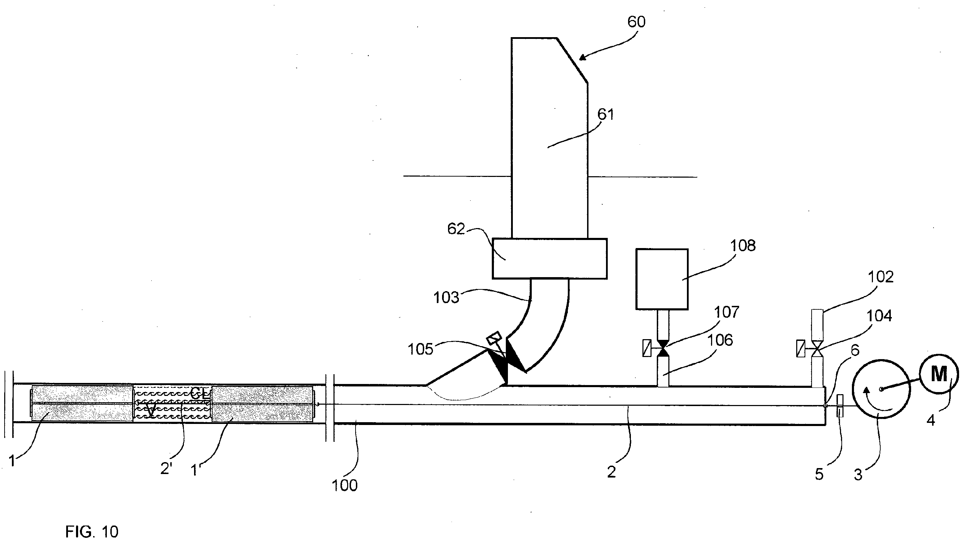

Figs. 8, 9 and 10 present an embodiment not part of the present invention wherein cleaning liquid CL is used, in addition to a cleaning means. In the embodiment of the figures there are two cleaning means 1, 1', which are arranged at a distance from each other in the cleaning movement direction. The first cleaning means 1 and the second cleaning means 1' are connected to each other with coupling means 2'. The coupling means 2' is e.g. a wire, a line, a cable or a rod. Between the first and the second cleaning means 1, 1' a space V is formed, which is bounded by the butt end of the first cleaning means 1, the butt end of the second cleaning means 1' and the inner wall of the piping 100, 101 that is at the point of the space V at that time. When it is desired to use cleaning liquid CL in addition to cleaning means 1, 1', cleaning liquid is conducted into the space V from the cleaning liquid reservoir 108 along the input branch coupling 106 for cleaning liquid by opening the valve 107. The input branch coupling 106 for cleaning liquid is preferably configured at the point of the pipe section 101 at which the space V between the first cleaning means 1 and the second cleaning means 1' is situated in the starting position of the cleaning means 1, 1'. Fig. 9 presents a situation in which the cleaning liquid CL has been conducted into the space V. After this the cleaning means 1, 1' and the cleaning liquid CL in the space V can be moved as a combination in a corresponding manner to what has been presented earlier in connection with an individual cleaning means e.g. in Figs. 1 and 2. The cleaning liquid CL can be e.g. a disinfecting cleaning liquid. Space for the cleaning liquid can, of course, also be arranged in the cleaning means.

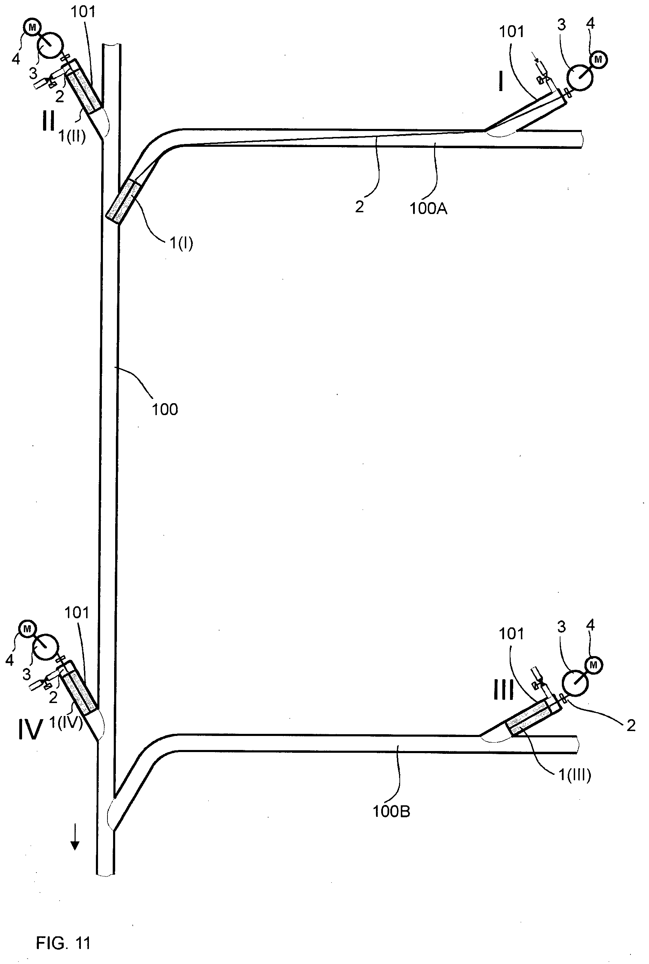

Fig. 11 further presents a part of the system according to an embodiment of the invention, when connected to the material conveying piping of a material conveying system, more particularly a pneumatic wastes conveying system, which figure presents a part of the conveying piping 100, 100A, 100B. A number of cleaning devices according to an embodiment of the invention are arranged in the conveying piping, which cleaning devices comprise a cleaning means 1, connected to it a transmission means 2, which is a wire, line, cable or corresponding means to be wound onto the reel 3, and a drive device 4 of the reel. In the system the pipe sections of the conveying piping 100, 100A, 100B of the material conveying system are cleaned/emptied in a certain sequence, in Fig. 11 in the numerical sequence (I, II, III, IV), with the cleaning means 1(I), 1(II), 1(III), 1(IV). In the system the displacement distances of the cleaning means 1(I), 1(II), 1(III), 1(IV) are arranged in such a way that the cleaning movement, i.e. displacement distance in the conveying pipe, of the cleaning means 1(I), 1(II), 1(III) of the previous cleaning section in the cleaning sequence (the cleaning sequence of each cleaning apparatus is marked with the Roman numerals I, II, II, IV), always extends slightly into the pipe section of the cleaning means of the next cleaning device 1(II), 1(III), 1(IV) in the cleaning sequence, from which pipe section it cleans/conveys the material onwards. In this case the material, cleaning waste, or other material in the pipe section, to be conveyed along with a cleaning means 1(I), 1(II), 1(III), 1(IV), in front of it, in the conveying direction is conveyed onwards from the pipe section (I, II, II, IV) always to the pipe section of the cleaning means of the next cleaning device in the cleaning sequence. The displacement distance of the cleaning means 1(I), 1(II), 1 (III), 1 (IV) is limited with the transmission means 2, which is connected to the cleaning means 1(I), 1(II), 1(III), 1 (IV). The transmission means 2 is arranged at its second end onto a reel 3, which is driven, if necessary, with a drive device 4. In Fig. 11, the pipe section 100A is cleaned/emptied first (I) by displacing the cleaning means 1(I) from the starting position, which is in the pipe section 101, a displacement distance, i.e. a cleaning movement, which extends up to the main conveying pipe 100 of the figure. In the figure the cleaning means 1(I) is presented in a position in which it is partly on the side of the main conveying pipe. Next, the cleaning means 1(I) can be displaced back in the first pipe section 100A and simultaneously the cleaning means 1(II) of the pipe section intended to be second (II) in sequence can already start to be displaced for cleaning/emptying the second pipe section of material with the second cleaning means, which in the figure is in the starting position of the pipe section intended to be second (II), in the pipe section 101. The cleaning section intended to be second extends e.g. in the figure further onwards in the cleaning direction (marked in the figure with an arrow). In this case the second cleaning section could extend e.g. to the point at which the conveying pipe section 100B that is intended to be the third emptied connects to the main conveying pipe, preferably to slightly past it. After this the pipe section 100B that is intended to be the third (III) is cleaned/emptied, with its cleaning means 1(III). Finally the pipe section that is intended to be the fourth (IV) in Fig. 11 is cleaned/emptied, which pipe section is, in the conveying direction in the main conveying pipe 100, an extension of the pipe section that is intended to be the second (II) cleaned/emptied, with the cleaning means 1(IV) of the fourth cleaning apparatus, which cleaning means in the figure is in the starting position of the pipe section intended to be fourth (IV), in the pipe section 101. In this way the conveying piping in the system or the desired section of the conveying piping is brought to be cleaned/emptied one pipe section at a time.

The cleaning means 1(I), 1(II), 1 (III), 1(IV) in the figures is plug-shaped, in which case it can also be used as a shut-off means of the piping 100, 100A, 100B, 101. In this case it can function in the piping as a shut-off valve, and possibly at least some of the shut-off valves of the piping of the pneumatic material conveying system can be replaced with it in the piping.

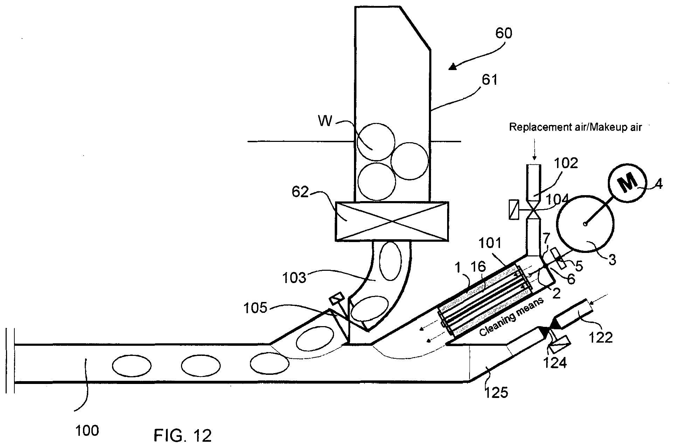

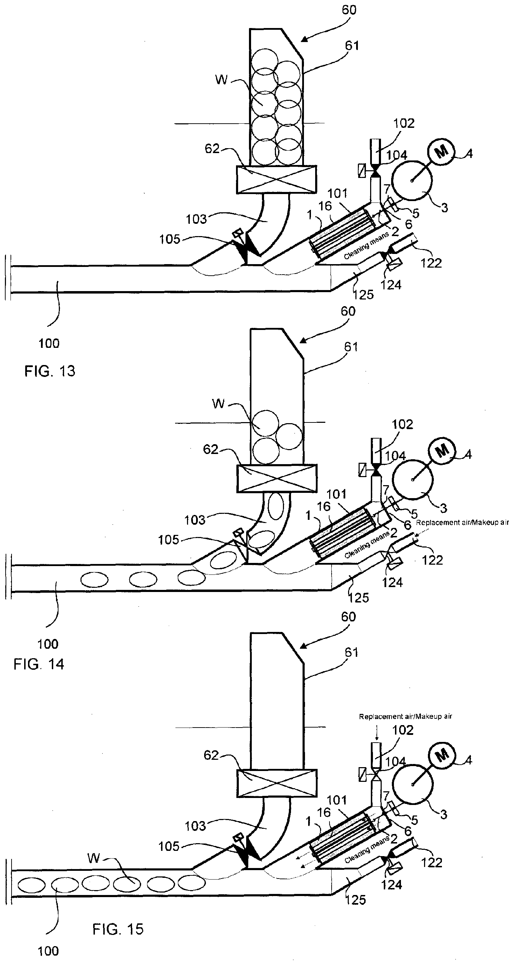

Fig. 12 further presents the operation of the solution according to an embodiment of the invention, in connection with a material input point. Presented in the figure is a situation in which there is material W, more particularly waste material, in the feed-in container of a material input point 60, which material is desired to be emptied into the conveying piping 100, via the input pipe 103. Before conveying it into the input pipe, the material is conducted through a rotary shaper 62, i.e. a formatter, of material, which compacts the material and shapes it to be better suited to the piping 103, 100. A pipe section 101 comprising a starting position for the cleaning means 1 is arranged into connection with the conveying pipe 100, connecting to it. The conveying pipe section 101 is at an angle with respect to the main conveying pipe 100 so that the cleaning means 1 can be conducted, if necessary, into the conveying piping. In the embodiment of the figure, a replacement air duct 16 extends through the cleaning means 1 as presented in Figs. 3b and 3c. The apparatus comprises a transmission means 2, such as a wire, line, cable or other transmission means suited for winding onto the reel 3. The moving apparatus already presented above, comprising a reel and its drive device, is also in the figure. A brake 5 is also separately presented in the figure. The conveying pipe section comprises a replacement air duct 102 and a replacement air valve in it. The conveying pipe 100 extends past (in the figure, to the right) the intersection point of the pipe section 101 of the starting position of the cleaning means. In the figure a convergent part 125, to which a second replacement air duct 122 and in it a second replacement air valve 124 connects, is formed in this section, in the butt end area of it, in the conveying pipe 100. The operation of this embodiment is presented in more detail in Figs. 13-19.

Figs. 13 - 19 present the operation in its different phases of one embodiment of the invention. Fig. 13 shows the starting situation, in which there is material W in the feed-in container 61, which material is intended to be conveyed onwards in the conveying piping 100. The cleaning means 1 is in the starting location in the pipe section 101. The replacement air valves 104, 124 of the replacement air ducts 102, 122 are closed.

In Fig. 14, the material W is fed into the piping 100 by opening the valve 105 of the input pipe 103. The material displaces through the rotary shaper via the input piping into the conveying pipe 100. The replacement air valve 124 of the replacement air duct 122 is open. In this case the waste is conveyed onwards in the piping by the aid of the pressure difference and transporting air flow produced by the partial-vacuum generator of the pneumatic pipe transport system for material. In the input phase the suction produced by the partial-vacuum generator is smaller than in the actual conveying phase. Also the energy consumption is smaller.

In Fig. 15 the desired amount (in the figure all) of the material W has displaced from the feed-in container 61 into the conveying piping 100. Now it is desired to feed the cleaning means 1 into the conveying piping 100 from its starting position, which is in pipe section 101. The second replacement air valve 124 in the second the replacement air duct 122 is closed. The replacement air valve 104 of the replacement air duct 102 in the pipe section 101 is opened. In this case replacement air is obtained via the replacement air ducts 16 of the cleaning means 1 for conveying the waste material W. The cleaning means 1 starts moving when the transmission means 2, such as a wire, line, cable or corresponding, is released from the reel 3. The pressure difference arising over the ducts 16 of the cleaning means 1 moves the cleaning means 1 in the piping. The blowing of replacement air traveling through from the ducts 16 of the cleaning means 1, on the one hand, blows into a material aggregation possibly traveling in front of the cleaning means, in which case, *inter alia,* the susceptibility to blockage formation decreases. On the other hand, if a material aggregation forms in front of the cleaning means 1 and closes some of the ducts 16, the pressure difference on the different sides of the cleaning means 1 increases. This, in turn, boosts displacement of the cleaning means and consequently the material conveying capability in the piping.

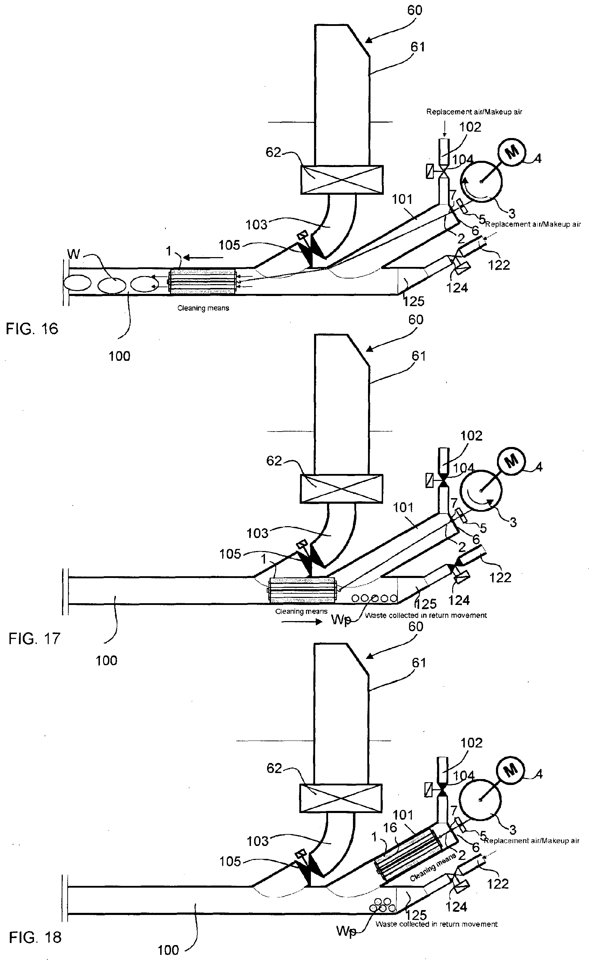

In Fig. 16 the piping 100 is cleaned with the cleaning means and possibly the material W in the conveying piping 100 is conveyed onwards (arrow in Fig. 16). When the cleaning means 1 has displaced from its starting position into the piping 100, the replacement air valves of both replacement air ducts can be opened. In Fig. 16 the valves 104, 124 of both replacement air ducts 102 and 122 are open. The suction/pressure difference achieved in the piping by the partial-vacuum generator of the pneumatic material conveying system can increase the conveying efficiency.

Fig. 17 presents the return movement of the cleaning means 1 back towards the starting position. The drive device 4 is used for the return movement in the case of the figure, driven by which drive device the transmission means 2 is wound onto the reel 3. In the return movement of the cleaning means 1 an amount, generally smaller, of waste material Wp that has detached from the conveying pipe 100 collects in the butt end area of the conveying pipe, near the convergent section 125 of it, when the cleaning means 1 is displaced back towards the starting position.

The waste material Wp collected along with the return movement of the cleaning means 1 can be conveyed in the conveying pipe 100, by the aid of the pressure difference produced in the conveying pipe 100 by the suction of the partial-vacuum generator of the material conveying system, towards the outlet end (to the left in figure 18), when the replacement air valve 124 of the second replacement air duct 122 is opened.

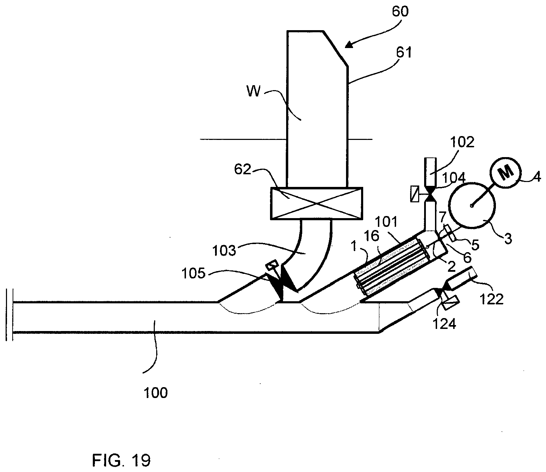

In Fig. 19 the operating cycle has been completed and the feed-in container 61 of the feed point 60 could again be emptied of possible waste.

The invention thus relates to a method for cleaning the conveying pipe of a pneumatic material conveying system, such as of a waste conveying system, and/or for conveying material that is in the piping, in which method at least one cleaning means 1 is fed into a conveying pipe, and a pressure difference is achieved in the pipe and under the influence of the pressure difference the cleaning means is brought to move for cleaning the pipe, and/or for conveying material, in the conveying pipe section intended to be cleaned. In the method a cleaning means 1 or a combination of a number of cleaning means 1, 1' is moved in the conveying piping 100, 101, and that the cleaning means 1 or combination of a number of cleaning means 1, 1' is connected to a transmission means 2, with which the movement of the cleaning means 1 or combination of a number of cleaning means 1, 1' in the conveying piping is limited or guided. According to the present invention, replacement air is conducted in the conveying piping through the replacement air duct 16 of the cleaning means. According to one embodiment the transmission means 2 is arranged in a moving device 3, 4, which moving device 3, 4 comprises at least a reel 3 and its drive device 4.

According to one embodiment the transmission means 2 is a transmission means, such as a wire, line, cable or corresponding, to be wound onto a reel 3 and discharged from the reel 3.

According to one embodiment the movement speed of the cleaning means 1 or combination of a number of cleaning means 1, 1' is slowed down, e.g. with a brake device 5.

According to one embodiment the cleaning means 1 or a combination of a number of cleaning means 1, 1' is moved in the piping by pulling with the transmission means 2 with the moving device 3, 4 alone or together with negative pressure and/or positive pressure.

According to one embodiment the cleaning means 1 or a combination of a number of cleaning means 1, 1' is moved in the conveying piping 100, 101 from the starting position the distance desired in a first direction and then in a second direction back to the starting position or at least in the direction of the starting position.

According to one embodiment the cleaning distance of the cleaning means 1 in the conveying piping 100, 101 is limited by a brake device 5 acting on the transmission means 2 or by limiting the winding out of the transmission means 2 from the reel 3.

According to one embodiment the movement of the cleaning means 1 in the conveying piping is facilitated by arranging replacement air into the pipe section 101 of the starting position of the cleaning means, into the space between its butt end part 7 and the cleaning means 1, when the cleaning means moves away from the starting position, or by removing air from there when the cleaning means moves towards the starting position, most suitably via the replacement air duct 102.

According to one embodiment the movement of the cleaning means 1 is facilitated by bringing air into the pipe section 101 of the starting position of the cleaning means, into the space between its butt end part 7 and the cleaning means 1, by connecting the blowing side of a pump device 115 to it, or by removing air from the pipe section 101 of the starting position, from the space between its butt end part 7 and the cleaning means 1, by connecting the suction side of the pump device 115 to it.

According to one embodiment cleaning liquid CL, in addition to the cleaning means 1, is brought into the conveying pipe, which cleaning liquid is moved in the conveying piping together with the cleaning means 1 or the cleaning means 1, 1'.

According to one embodiment the cleaning means 1, 1' and the cleaning liquid CL brought into the space V between the inner surface of the conveying pipe 100, 101 and the cleaning means are moved as a combination.

According to one embodiment in the method possible pipe blockages are also removed with the cleaning means 1.

According to one embodiment the cleaning means 1 is used as a shut-off means in the conveying piping.

The invention also relates to cleaning apparatus for a conveying pipe 100, 101 of a pneumatic material conveying system, such as a waste conveying system, which apparatus comprises at least one cleaning means 1 to be fed into a conveying pipe, which cleaning means is configured to move under the influence of a pressure difference for cleaning a pipe in a conveying pipe section intended to be cleaned and/or for conveying material that is in the pipe in at least one direction. The cleaning means 1 is connected to a transmission means 2, which is configured to limit or to guide the movement of the cleaning means 1. According to the present invention, a replacement air duct 16 is arranged in the cleaning means, through it from a first side to a second side. According to one embodiment the transmission means is arranged in a moving device 3, 4, which moving device 3, 4 comprises at least a reel 3 and its drive device 4.

According to one embodiment the transmission means 2 is a transmission means, such as a wire, line, cable or corresponding, to be wound onto a reel 3 and discharged from the reel 3.

According to one embodiment the apparatus comprises a brake device 5.

According to one embodiment the apparatus comprises a replacement air duct 102, which is provided with a valve means 104, and arranged on the pipe section 101 of the starting position of the cleaning means 1, in a section between its butt end part 7 and the cleaning means 1.

According to one embodiment the apparatus comprises a pump device 115, the suction side and/or blowing side of which can be connected to the pipe section 101 of the starting position of the cleaning means 1, in a section between its butt end part 7 and the cleaning means 1.

According to one embodiment there are a number of cleaning means 1, 1', which are connected to each other with a coupling means 2'.

According to one embodiment the apparatus comprises means for bringing cleaning liquid CL into the conveying pipe, preferably into connection with the cleaning means 1 or a number of cleaning means 1, 1'.

According to one embodiment the cleaning means 1 is configured to function as a shut-off means in the conveying piping.

The invention also relates to a method and to a pneumatic material conveying system, which comprises conveying piping, means for feeding the material to be conveyed into the conveying piping, as well as means for achieving a pressure difference in the conveying piping, and a separating device for separating the material from the transporting air. The system comprises a number of cleaning devices, each of which cleaning devices comprises at least one cleaning means 1 to be fed into a conveying pipe, which cleaning means which cleaning means is configured to move under the influence of a pressure difference for cleaning a pipe in a conveying pipe section intended to be cleaned and/or for conveying material that is in the pipe in at least one direction, and that the cleaning means 1 is connected to a transmission means 2, which is configured to limit or to guide the movement of the cleaning means 1, and that the cleaning means 1 (I), 1 (II), 1 (III), 1(IV) of a number of cleaning devices are configured to clean the conveying piping 100, 100A, 100B in a desired sequence I, II, II, IV and to convey material that has collected in the pipe section onwards in the conveying piping, preferably towards the separating device. According to the present invention, a replacement air duct 16 is arranged in the cleaning means, through it from a first side to a second side. According to one embodiment in the system the displacement distances of the cleaning means (1(I), 1(II), 1(III), 1(IV)) are arranged in such a way that the cleaning movement, i.e. displacement distance in the conveying pipe, of the cleaning means (1(I), 1(II), 1(III)) of the previous cleaning section in the cleaning sequence, always extends slightly into the pipe section of the cleaning means of the next cleaning device (1(II), 1(III), 1(IV)) in the cleaning sequence, from which pipe section it cleans/conveys the material onwards.

According to one embodiment the transmission means 2 of the cleaning device is arranged in a moving device 3, 4, which moving device 3, 4 comprises at least a reel 3 and its drive device 4.

According to one embodiment the transmission means 2 of the cleaning device is a transmission means, such as a wire, line, cable or corresponding, to be wound onto a reel 3 and discharged from the reel 3.

According to one embodiment the cleaning apparatus comprises a brake device 5.

According to one embodiment the cleaning apparatus comprises a replacement air duct 102, which is provided with a valve means 104, and arranged on the pipe section 101 of the starting position of the cleaning means 1, in a section between its butt end part 7 and the cleaning means 1.

According to one embodiment the cleaning apparatus comprises a pump device 115, the suction side and/or blowing side of which can be connected to the pipe section 101 of the starting position of the cleaning means 1, in a section between its butt end part 7 and the cleaning means 1.

According to one embodiment there are a number of cleaning means 1, 1', which are connected to each other with a coupling means 2'.

According to one embodiment the cleaning apparatus comprises means for bringing cleaning liquid CL into the conveying pipe, preferably into connection with the cleaning means 1 or a number of cleaning means 1, 1'.

According to one embodiment in the system the cleaning means 1 is configured to function as a shut-off means in the conveying piping.

According to one embodiment the movement of the cleaning means 1 is slowed down by slowing the movement of the transmission means. Typically the winding out of the reel is slowed down with the brake device 5. In this case the conveying speed of the cleaning means in the first direction can be easily adjusted. With this the cleaning result can possibly be influenced.

The diameter of conveying piping is typically in the region of 50 - 500 mm.

The cleaning apparatus according to the invention can also be used for clearing and removing a possible blockage occurring in the piping, in addition to, or instead of, for cleaning.

In the embodiment of the invention, with the transmission means the escaping of the cleaning means into the piping along with the air current is prevented and at the same time the movement speed can, if necessary, be braked. The cleaning means can be displaced outwards with suction and inwards with pressure and alternatively can be pulled inside with the transmission means. It can also be conceived that, together, the transmission means pulls with the moving device and the pressure in the piping pushes the cleaning means inside. The cable also functions as a guide, particularly in a Y-branch, where otherwise it would go straight.

The cleaning means can be e.g. cylindrical or spherical or can possess some other suitable shape. The cleaning means becomes adequately closer against the inside wall of the piping and at the same time cleans by detaching from the wall any material that has possibly accumulated on the wall.

Typically the material to be conveyed in the pipings of a material conveying system is waste material, such as waste material arranged in bags, e.g. household wastes or sorted material. The material is conducted along the conveying piping to the output end, where it is separated with a separating device from the transporting air and is conveyed into a waste container, transport container or corresponding.

It is obvious to the person skilled in the art that the invention is not limited to the embodiments presented above, but that it can be varied within the scope of the claims presented below. The characteristic features possibly presented in the description in conjunction with other characteristic features can if necessary be used separately to each other.

## Claims

1. Method for cleaning the conveying pipe of a pneumatic material conveying system, such as of a waste conveying system, and/or for conveying material that is in the piping, in which method at least one cleaning means (1) is fed into a conveying pipe, and a pressure difference is achieved in the pipe and under the influence of the pressure difference the cleaning means is brought to move for cleaning the pipe, and/or for conveying material, in the conveying pipe section intended to be cleaned, wherein in the method a cleaning means (1) or a combination of a number of cleaning means (1, 1') is moved in the conveying piping (100, 101), and in that the cleaning means (1) or combination of a number of cleaning means (1, 1') is connected to a transmission means (2), with which the movement of the cleaning means (1) or combination of a number of cleaning means (1, 1') in the conveying piping is limited or guided, **characterized in that** a replacement air duct (16) is arranged in the cleaning means (1), through it from a first side to a second side, through which duct replacement air is conducted in the conveying piping.

2. Method according to claim 1, **characterized in that** the transmission means (2) is arranged in a moving device (3, 4), which moving device (3, 4) comprises at least a reel (3) and its drive device (4).

3. Method according to claim 2, **characterized in that** the transmission means (2) is a transmission means, such as a wire, line, cable or corresponding, to be wound onto the reel (3) and discharged from the reel (3).

4. Method according to any of claims 1 - 3, **characterized in that** the movement speed of the cleaning means (1) or combination of a number of cleaning means (1, 1') is slowed down, e.g. with a brake device (5).

5. Method according to any of claims 1 - 4, **characterized in that** the cleaning means (1) or a combination of a number of cleaning means (1, 1') is moved in the piping by pulling with the transmission means (2) with the moving device (3, 4) alone or together with negative pressure and/or positive pressure.

6. Method according to any of claims 1 - 5, **characterized in that** the cleaning means (1) or a combination of a number of cleaning means (1, 1') is moved in the conveying piping (100, 101) from the starting position the distance desired in a first direction and then in a second direction back to the starting position or at least in the direction of the starting position.

7. Method according to any of claims 1 - 6, **characterized in that** the cleaning distance of the cleaning means (1) in the conveying piping (100, 101) is limited by a brake device (5) acting on the transmission means (2) or by limiting the winding out of the transmission means (2) from the reel (3).

8. Method according to any of claims 1 - 7, **characterized in that** the movement of the cleaning means (1) in the conveying piping is facilitated by arranging replacement air into the pipe section (101) of the starting position of the cleaning means, into the space between its butt end part (7) and the cleaning means (1), when the cleaning means moves away from the starting position, or by removing air from there when the cleaning means moves towards the starting position, most suitably via the replacement air duct (102).

9. Method according to any of claims 1 - 8, **characterized in that** the movement of the cleaning means (1) is facilitated by bringing air into the pipe section (101) of the starting position of the cleaning means, into the space between its butt end part (7) and the cleaning means (1), by connecting the blowing side of a pump device (115) to it, or by removing air from the space between the pipe section (101) of the starting position, its butt end part (7), and the cleaning means (1) by connecting the suction side of a pump device (115) to it.

10. Method according to any of claims 1 - 9, **characterized in that** cleaning liquid (CL), in addition to the cleaning means (1), is brought into the conveying pipe, which cleaning liquid is moved in the conveying piping together with the cleaning means (1) or the cleaning means (1, 1').

11. Method according to any of claims 1 - 10, **characterized in that** the cleaning means (1, 1') and the cleaning liquid (CL) brought into the space (V) between the inner surface of the conveying pipe (100, 101) and the cleaning means are moved as a combination.

12. Method according to any of claims 1 - 11, **characterized in that** in the method possible pipe blockages are also removed with the cleaning means (1).

13. Method according to any of claims 1 - 12, **characterized in that** the cleaning means (1) is used as a shut-off means in the conveying piping.

14. Cleaning apparatus for a conveying pipe (100, 101) of a pneumatic material conveying system, such as a waste conveying system, which apparatus comprises at least one cleaning means (1) to be fed into a conveying pipe, which cleaning means is configured to move under the influence of a pressure difference for cleaning a pipe in the conveying pipe section intended to be cleaned and/or for conveying material that is in the pipe in at least one direction, whereby the cleaning means (1) is connected to a transmission means (2), which is configured to limit or to guide the movement of the cleaning means (1), **characterized in that** a replacement air duct (16) is arranged in the cleaning means (1), through the cleaning means (1) from a first side to a second side, such that the cleaning means (1) is adapted to conduct replacement air in the conveying piping through the replacement air duct (16) of the cleaning means (1).

15. Apparatus according to claim 14, **characterized in that** the transmission means is arranged in a moving device (3, 4), which moving device (3, 4) comprises at least a reel (3) and its drive device (4).

16. Apparatus according to claim 15, **characterized in that** the transmission means (2) is a transmission means, such as a wire, line, cable or corresponding, to be wound onto the reel (3) and discharged from the reel (3).

17. Apparatus according to any of claims 14 - 16, **characterized in that** the apparatus comprises a brake device (5).

18. Apparatus according to any of claims 14 - 17, **characterized in that** the apparatus comprises a replacement air duct (102), which is provided with a valve means (104), and arranged on the pipe section (101) of the starting position of the cleaning means (1), in a section between its butt end part (7) and the cleaning means (1).

19. Apparatus according to any of claims 14 - 18, **characterized in that** the apparatus comprises a pump device (115), the suction side and/or blowing side of which can be connected to the pipe section (101) of the starting position of the cleaning means (1), in a section between its butt end part (7) and the cleaning means (1).

20. Apparatus according to any of claims 14 - 19, **characterized in that** there are a number of cleaning means (1, 1'), which are connected to each other with a coupling means (2').

21. Apparatus according to any of claims 14 - 20, **characterized in that** the apparatus comprises means for bringing cleaning liquid (CL) into the conveying pipe, preferably into connection with the cleaning means (1) or a number of cleaning means (1, 1').

22. Apparatus according to any of claims 14 - 21, **characterized in that** the cleaning means (1) is configured to function as a shut-off means in the conveying piping.

23. Pneumatic material conveying system, which comprises conveying piping, means for feeding the material to be conveyed into the conveying piping, as well as means for achieving a pressure difference in the conveying piping, and a separating device for separating the material from the transporting air, **charact erized** in that the system comprises a number of cleaning devices, each of which cleaning devices comprises at least one cleaning means (1) to be fed into a conveying pipe, which cleaning means is configured to move under the influence of a pressure difference for cleaning a pipe in the conveying pipe section intended to be cleaned and/or for conveying material that is in the pipe in at least one direction, and in that the cleaning means (1) is connected to a transmission means (2), which is configured to limit or to guide the movement of the cleaning means (1), and in that the cleaning means (1 (I), 1 (II), 1 (III), 1 (IV)) of a number of cleaning devices are configured to clean the conveying piping (100, 100A, 100B) in a desired sequence (I, II, II, IV) and/or to convey material that has collected in the pipe section onwards in the conveying piping, preferably towards a separating device, and in that a replacement air duct (16) is arranged in the cleaning means (1), from its first side to its second side, such that the cleaning means (1) is adapted to conduct replacement air in the conveying piping through the replacement air duct (16) of the cleaning means (1).

24. System according to claim 23, **characterized in that** in the system the displacement distances of the cleaning means (1 (I), 1 (II), 1(III), 1 (IV)) are arranged in such a way that the cleaning movement, i.e. displacement distance in the conveying pipe, of the cleaning means (1(I), 1(II), 1(III)) of the previous cleaning section in the cleaning sequence, always extends slightly into the pipe section of the cleaning means of the next cleaning device (1(II), 1(III), 1(IV)) in the cleaning sequence, from which pipe section it cleans/conveys the material onwards.

25. System according to claim 23 or 24, **characterized in that** the transmission means (2) of the cleaning device is arranged in a moving device (3, 4), which moving device (3, 4) comprises at least a reel (3) and its drive device (4).

26. System according to claim 25, **characterized in that** the transmission means (2) of the cleaning device is a transmission means, such as a wire, line, cable or corresponding, to be wound onto the reel (3) and discharged from the reel (3).

27. System according to any of claims 23 - 26, **characterized in that** in the system the cleaning means (1) is moved in the return direction in the piping by pulling with the transmission means (2) with the moving device (3, 4) alone or together with negative pressure and/or positive pressure.

28. System according to any of claims 23 - 27, **characterized in that** the cleaning apparatus comprises a replacement air duct (102), which is provided with a valve means (104), and arranged on the pipe section (101) of the starting position of the cleaning means (1), in a section between its butt end part (7) and the cleaning means (1).

29. System according to any of claims 23 - 28, **characterized in that** the cleaning apparatus comprises a pump device (115), the suction side and/or blowing side of which can be connected to the pipe section (101) of the starting position of the cleaning means (1), in a section between its butt end part (7) and the cleaning means (1).

30. System according to any of claims 23 - 29, **characterized in that** there are a number of cleaning means (1, 1'), which are connected to each other with a coupling means (2').

31. System according to any of claims 23 - 30, **characterized in that** the cleaning apparatus comprises means for bringing cleaning liquid (CL) into the conveying pipe, preferably into connection with the cleaning means (1) or a number of cleaning means (1, 1').

32. System according to any of claims 23 - 31, **characterized in that** in the system the cleaning means (1) is configured to function as a shut-off means in the conveying piping.

33. System according to any of claims 23 - 32, **characterized in that** the movement of the cleaning means (1) is slowed down by slowing the movement of the transmission means.

## Patentansprüche

1. Verfahren zur Reinigung der Förderleitung eines pneumatischen Materialfördersystems, wie etwa eines Abfallfördersystems, und/oder zum Fördern von Material, das sich in der Rohrleitung befindet, wobei in dem Verfahren wenigstens eine Reinigungseinrichtung (1) in eine Förderleitung hinein zugeführt wird und eine Druckdifferenz in der Leitung erreicht wird und unter dem Einfluss der Druckdifferenz die Reinigungseinrichtung dazu gebracht wird, sich zur Reinigung der Leitung und/oder zum Fördern von Material in dem Förderleitungsabschnitt, der gereinigt werden soll, zu bewegen, wobei in dem Verfahren eine Reinigungseinrichtung (1) oder eine Kombination aus einer Anzahl von Reinigungseinrichtungen (1, 1') in der Förderrohrleitung (100, 101) bewegt wird und die Reinigungseinrichtung (1) oder Kombination einer Anzahl von Reinigungseinrichtungen (1, 1') mit einer Übertragungseinrichtung (2) verbunden ist, mit der die Bewegung der Reinigungseinrichtung (1) oder Kombination einer Anzahl von Reinigungseinrichtungen (1, 1') in der Förderrohrleitung begrenzt oder geführt wird,
**dadurch gekennzeichnet, dass**
ein Ersatzluftkanal (16) in der Reinigungseinrichtung (1), durch diese hindurch von einer ersten Seite zu einer zweiten Seite, angeordnet ist, wobei durch den Kanal Ersatzluft in der Förderrohrleitung geleitet wird.

2. Verfahren nach Anspruch 1, **dadurch gekennzeichnet, dass** die Übertragungseinrichtung (2) in einer Bewegungsvorrichtung (3, 4) eingerichtet ist, wobei die Bewegungsvorrichtung (3, 4) wenigstens eine Spule (3) und ihre Antriebsvorrichtung (4) aufweist.

3. Verfahren nach Anspruch 2, **dadurch gekennzeichnet, dass** die Übertragungseinrichtung (2) ein Übertragungsmittel, wie beispielsweise ein Draht, eine Leine, ein Kabel oder Entsprechendes, ist, das auf die Spule (3) aufzuwickeln und von der Spule (3) abzugeben ist.

4. Verfahren nach einem beliebigen der Ansprüche 1-3, **dadurch gekennzeichnet, dass** die Bewegungsgeschwindigkeit der Reinigungseinrichtung (1) oder Kombination einer Anzahl von Reinigungseinrichtungen (1, 1'), z.B. mit einer Bremsvorrichtung (5), verlangsamt wird.

5. Verfahren nach einem beliebigen der Ansprüche 1-4, **dadurch gekennzeichnet, dass** die Reinigungseinrichtung (1) oder eine Kombination einer Anzahl von Reinigungseinrichtungen (1, 1') in der Rohrleitung bewegt wird, indem sie mittels der Übertragungseinrichtung (2) mit der Bewegungsvorrichtung (3, 4) alleine oder gemeinsam mit einem negativen Druck und/oder einem positiven Druck gezogen wird.

6. Verfahren nach einem beliebigen der Ansprüche 1-5, **dadurch gekennzeichnet, dass** die Reinigungseinrichtung (1) oder eine Kombination einer Anzahl von Reinigungseinrichtungen (1, 1') in der Förderrohrleitung (100, 101) von der Startposition aus über die gewünschte Strecke in einer erste Richtung und anschließend in eine zweite Richtung zurück zu der Startposition oder wenigstens in die Richtung der Startposition bewegt wird.

7. Verfahren nach einem beliebigen der Ansprüche 1-6, **dadurch gekennzeichnet, dass** die Reinigungsstrecke der Reinigungseinrichtung (1) in der Förderrohrleitung (100, 101) durch eine Bremsvorrichtung (5), die auf die Übertragungseinrichtung (2) einwirkt, oder durch Begrenzung der Abwicklung der Übertragungseinrichtung (2) von der Spule (3) begrenzt ist.

8. Verfahren nach einem beliebigen der Ansprüche 1-7, **dadurch gekennzeichnet, dass** die Bewegung der Reinigungseinrichtung (1) in der Förderrohrleitung durch Einbringen von Ersatzluft in den Leitungsabschnitt (101) der Startposition der Reinigungseinrichtung, in den Zwischenraum zwischen seinem Stumpfendteil (7) und der Reinigungseinrichtung (1), wenn sich die Reinigungseinrichtung von der Startposition weg bewegt, oder durch Entfernen von Luft von dort, wenn sich die Reinigungseinrichtung zu der Startposition hin bewegt, am geeignetsten über den Ersatzluftkanal (102), unterstützt wird.

9. Verfahren nach einem beliebigen der Ansprüche 1-8, **dadurch gekennzeichnet, dass** die Bewegung der Reinigungseinrichtung (1)durch Einbringen von Luft in den Leitungsabschnitt (101) der Startposition der Reinigungseinrichtung, in den Zwischenraum zwischen seinem Stumpfendteil (7) und der Reinigungseinrichtung (1), durch Verbinden der Druckseite einer Pumpvorrichtung (115) mit diesem, oder durch Entfernen von Luft aus dem Zwischenraum zwischen dem Leitungsabschnitt (101) der Startposition, seinem Stumpfendteil (7) und der Reinigungseinrichtung (1) durch Verbinden der Saugseite einer Pumpvorrichtung (115) mit diesem unterstützt wird.

10. Verfahren nach einem beliebigen der Ansprüche 1-9, **dadurch gekennzeichnet, dass** zusätzlich zu der Reinigungseinrichtung (1) eine Reinigungsflüssigkeit (CL) in die Förderleitung eingebracht wird, wobei die Reinigungsflüssigkeit in der Förderleitung gemeinsam mit der Reinigungseinrichtung (1) oder den Reinigungseinrichtungen (1, 1') bewegt wird.

11. Verfahren nach einem beliebigen der Ansprüche 1-10, **dadurch gekennzeichnet, dass** die Reinigungseinrichtungen (1, 1') und die Reinigungsflüssigkeit (CL), die in den Zwischenraum (V) zwischen der Innenfläche der Förderleitung (100, 101) und den Reinigungseinrichtungen eingebracht werden, in Kombination miteinander bewegt werden.

12. Verfahren nach einem beliebigen der Ansprüche 1-11, **dadurch gekennzeichnet, dass** in dem Verfahren mögliche Leitungsblockaden mit der Reinigungseinrichtung (1) ebenfalls beseitigt werden.

13. Verfahren nach einem beliebigen der Ansprüche 1-12, **dadurch gekennzeichnet, dass** die Reinigungseinrichtung (1) als eine Absperreinrichtung in der Förderleitung verwendet wird.

14. Reinigungsvorrichtung für eine Förderleitung (100, 101) eines pneumatischen Materialfördersystems, wie etwa eines Abfallfördersystems, wobei die Vorrichtung wenigstens eine Reinigungseinrichtung (1) aufweist, die in eine Förderleitung hinein zugeführt werden soll, wobei die Reinigungseinrichtung eingerichtet ist, um sich unter dem Einfluss einer Druckdifferenz zur Reinigung einer Leitung in dem Förderleitungsabschnitt, der gereinigt werden soll, und/oder zum Fördern von Material, das sich in der Leitung befindet, in wenigstens eine Richtung zu bewegen, wobei die Reinigungseinrichtung (1) mit einer Übertragungseinrichtung (2) verbunden ist, die dazu eingerichtet ist, die Bewegung der Reinigungseinrichtung (1) zu begrenzen oder zu führen, **dadurch gekennzeichnet, dass** ein Ersatzluftkanal (16) in der Reinigungseinrichtung (1), durch die Reinigungseinrichtung (1) hindurch von einer ersten Seite zu einer zweiten Seite, derart angeordnet ist, dass die Reinigungseinrichtung (1) geeignet ist, Ersatzluft in der Förderrohrleitung durch den Ersatzluftkanal (16) der Reinigungseinrichtung (1) zu leiten.

15. Vorrichtung nach Anspruch 14, **dadurch gekennzeichnet, dass** die Übertragungseinrichtung in einer Bewegungsvorrichtung (3, 4) angeordnet ist, wobei die Bewegungsvorrichtung (3, 4) wenigstens eine Spule (3) und ihre Antriebsvorrichtung (4) aufweist.

16. Vorrichtung nach Anspruch 15, **dadurch gekennzeichnet, dass** die Übertragungseinrichtung (2) ein Übertragungsmittel, wie beispielsweise ein Draht, eine Leine, ein Kabel oder Entsprechendes, ist, das auf die Spule (3) aufzuwickeln und von der Spule (3) abzugeben ist.

17. Vorrichtung nach einem beliebigen der Ansprüche 14-16, **dadurch gekennzeichnet, dass** die Vorrichtung eine Bremsvorrichtung (5) aufweist.

18. Vorrichtung nach einem beliebigen der Ansprüche 14-17, **dadurch gekennzeichnet, dass** die Vorrichtung einen Ersatzluftkanal (102) aufweist, der mit einer Ventileinrichtung (104) versehen und an dem Leitungsabschnitt (101) der Startposition der Reinigungseinrichtung (1) in einem Abschnitt zwischen seinem Stumpfendteil (7) und der Reinigungseinrichtung (1) angeordnet ist.

19. Vorrichtung nach einem beliebigen der Ansprüche 14-18, **dadurch gekennzeichnet, dass** die Vorrichtung eine Pumpvorrichtung (115) aufweist, deren Saugseite und/oder Druckseite mit dem Leitungsabschnitt (101) der Startposition der Reinigungseinrichtung (1) in einem Abschnitt zwischen dessen Stumpfendteil (7) und der Reinigungseinrichtung (1) verbunden sein kann.

20. Vorrichtung nach einem beliebigen der Ansprüche 14-19, **dadurch gekennzeichnet, dass** eine Anzahl von Reinigungseinrichtungen (1, 1') vorhanden ist, die über eine Koppeleinrichtung (2') miteinander verbunden sind.

21. Vorrichtung nach einem beliebigen der Ansprüche 14-20, **dadurch gekennzeichnet, dass** die Vorrichtung Mittel zum Einbringen einer Reinigungsflüssigkeit (CL) in die Förderleitung, vorzugsweise in die Verbindung mit der Reinigungseinrichtung (1) oder einer Anzahl von Reinigungseinrichtungen (1, 1') aufweist.

22. Vorrichtung nach einem beliebigen der Ansprüche 14-21, **dadurch gekennzeichnet, dass** die Reinigungseinrichtung (1) eingerichtet ist, um als eine Absperreinrichtung in der Förderrohrleitung zu funktionieren.

23. Pneumatisches Materialfördersystem, das eine Förderrohrleitung, Mittel zum Einspeisen des zu befördernden Materials in die Förderrohrleitung sowie Mittel zum Erreichen einer Druckdifferenz in der Förderrohrleitung und eine Trennvorrichtung zum Trennen des Materials von der Transportluft aufweist, **dadurch gekennzeichnet, dass** das System eine Anzahl von Reinigungsvorrichtungen aufweist, wobei jede der Reinigungsvorrichtungen wenigstens eine Reinigungseinrichtung (1) aufweist, die in eine Förderleitung hinein zuzuführen ist, wobei die Reinigungseinrichtung eingerichtet ist, um sich unter dem Einfluss einer Druckdifferenz zur Reinigung einer Leitung in dem Förderleitungsabschnitt, der gereinigt werden soll, und/oder zum Fördern von Material, das sich in der Leitung befindet, in wenigstens eine Richtung zu bewegen, und dass die Reinigungseinrichtung (1) mit einer Übertragungseinrichtung (2) verbunden ist, die dazu eingerichtet ist, die Bewegung der Reinigungseinrichtung (1) zu begrenzen oder zu führen, und dass die Reinigungseinrichtungen (1(I), 1(II), 1(III), 1(IV)) einer Anzahl von Reinigungsvorrichtungen eingerichtet sind, um die Förderrohrleitung (100, 100A, 100B) in einer gewünschten Abfolge (I, II, II, IV) zu reinigen und/oder Material, das sich in dem Leitungsabschnitt angesammelt hat, weiter in der Förderrohrleitung, vorzugsweise zu einer Trennvorrichtung hin zu leiten, und dass ein Ersatzluftkanal (16) in der Reinigungseinrichtung (1) von ihrer ersten Seite zu ihrer zweiten Seite derart eingerichtet ist, dass die Reinigungseinrichtung (1) geeignet ist, um Ersatzluft in der Förderrohrleitung durch den Ersatzluftkanal (16) der Reinigungseinrichtung (1) hindurch zu leiten.

24. System nach Anspruch 23, **dadurch gekennzeichnet, dass** in dem System die Verschiebewege der Reinigungseinrichtungen (1(I), 1(II), 1(III), 1(IV)) in einer derartigen Weise angeordnet sind, dass die Reinigungsbewegung, d.h. der Verschiebeweg in der Förderleitung, der Reinigungseinrichtungen (1(I), 1(II), 1(III)) des vorherigen Reinigungsabschnitts in der Reinigungsabfolge sich etwas in den Leitungsabschnitt der Reinigungseinrichtung der nächsten Reinigungsvorrichtung (1(II), 1(III), 1(IV)) in der Reinigungsabfolge, von welchem Zeitungsabschnitt sie das Material reinigt/weiter fördert, hinein erstreckt.

25. System nach Anspruch 23 oder 24, **dadurch gekennzeichnet, dass** die Übertragungseinrichtung (2) der Reinigungsvorrichtung in einer Bewegungsvorrichtung (3, 4) angeordnet ist, wobei die Bewegungsvorrichtung (3, 4) wenigstens eine Spule (3) und ihre Antriebsvorrichtung (4) aufweist.

26. System nach Anspruch 25, **dadurch gekennzeichnet, dass** die Übertragungseinrichtung (2) der Reinigungsvorrichtung ein Übertragungsmittel, wie beispielsweise ein Draht, eine Leine, ein Kabel oder Entsprechendes, ist, das auf die Spule (3) aufzuwickeln und von der Spule (3) abzugeben ist.

27. System nach einem beliebigen der Ansprüche 23-26, **dadurch gekennzeichnet, dass** in dem System die Reinigungseinrichtung (1) in der Rückkehrrichtung in der Leitung bewegt wird, indem sie mittels der Übertragungseinrichtung (2) mit der Bewegungsvorrichtung (3, 4) alleine oder gemeinsam mit einem negativen Druck und/oder einem positiven Druck gezogen wird.

28. System nach einem beliebigen der Ansprüche 23-37, **dadurch gekennzeichnet, dass** die Reinigungsvorrichtung einen Ersatzluftkanal (102) aufweist, der mit einer Ventileinrichtung (104) versehen und an dem Leitungsabschnitt (101) der Startposition der Reinigungseinrichtung (1) in einem Abschnitt zwischen seinem Stumpfendteil (7) und der Reinigungseinrichtung (1) angeordnet ist.

29. System nach einem beliebigen der Ansprüche 23-28, **dadurch gekennzeichnet, dass** die Reinigungsvorrichtung eine Pumpvorrichtung (115) aufweist, deren Saugseite und/oder Druckseite mit dem Leitungsabschnitt (101) der Startposition der Reinigungseinrichtung (1) in einem Abschnitt zwischen seinem Stumpfendteil (7) und der Reinigungseinrichtung (1) verbunden sein kann.

30. System nach einem beliebigen der Ansprüche 23-29, **dadurch gekennzeichnet, dass** eine Anzahl von Reinigungseinrichtungen (1, 1') vorhanden ist, die über eine Koppeleinrichtung (2') miteinander verbunden sind.

31. System nach einem beliebigen der Ansprüche 23-30, **dadurch gekennzeichnet, dass** die Reinigungsvorrichtung Mittel zum Einbringen einer Reinigungsflüssigkeit (CL) in die Förderleitung, vorzugsweise in eine Verbindung mit der Reinigungseinrichtung (1) oder einer Anzahl von Reinigungseinrichtungen (1, 1') hinein, aufweist.

32. System nach einem beliebigen der Ansprüche 23-31, **dadurch gekennzeichnet, dass** in dem System die Reinigungseinrichtung (1) eingerichtet ist, um als eine Absperreinrichtung in der Förderrohrleitung zu funktionieren.

33. System nach einem beliebigen der Ansprüche 23-32, **dadurch gekennzeichnet, dass** die Bewegung der Reinigungseinrichtung (1) durch Verlangsamung der Bewegung der Übertragungseinrichtung verlangsamt wird.

## Revendications

1. Procédé pour nettoyer le tuyau de transport d'un système de transport de matériau pneumatique, tel qu'un système de transport de déchets et/ou pour transporter du matériau qui est dans le tuyau, dans lequel procédé, au moins un moyen de nettoyage (1) est amené dans un tuyau de transport, et une différence de pression est obtenue dans le tuyau et sous l'influence de la différence de pression, le moyen de nettoyage est amené à se déplacer pour nettoyer le tuyau et/ou pour transporter le matériau, dans la section de tuyau de transport prévue pour être nettoyée, dans lequel, dans le procédé, un moyen de nettoyage (1) ou une combinaison d'un certain nombre de moyens de nettoyage (1, 1') est déplacé(e) dans le tuyau de transport (100, 101), et en ce que le moyen de nettoyage (1) ou la combinaison d'un certain nombre de moyens de nettoyage (1, 1') est raccordé (e) à un moyen de transmission (2), avec lequel, le mouvement du moyen de nettoyage (1) ou de la combinaison d'un certain nombre de moyens de nettoyage (1, 1') dans le tuyau de transport est limité ou guidé,
**caractérisé en ce qu'**un conduit d'air de remplacement (16) est agencé dans le moyen de nettoyage (1) à travers ce dernier, d'un premier côté à un second côté, à travers lequel conduit, l'air de remplacement est amené dans le tuyau de transport.

2. Procédé selon la revendication 1, **caractérisé en ce que** le moyen de transmission (2) est agencé dans un dispositif de déplacement (3, 4), lequel dispositif de déplacement (3, 4) comprend au moins une bobine (3) et son dispositif d'entraînement (4).

3. Procédé selon la revendication 2, **caractérisé en ce que** le moyen de transmission (2) est un moyen de transmission, tel qu'un fil, une ligne, un câble ou similaire, destiné à être enroulé sur la bobine (3) et déchargé de la bobine (3).

4. Procédé selon l'une quelconque des revendications 1 à 3, **caractérisé en ce que** la vitesse de déplacement du moyen de nettoyage (1) ou d'une combinaison d'un certain nombre de moyens de nettoyage (1, 1') est ralentie, par exemple avec un dispositif de frein (5).

5. Procédé selon l'une quelconque des revendications 1 à 4, **caractérisé en ce que** le moyen de nettoyage (1) ou une combinaison d'un certain nombre de moyens de nettoyage (1, 1') est déplacé(e) dans le tuyau en tirant avec le moyen de transmission (2) avec le dispositif de déplacement (3, 4) seul ou conjointement avec la pression négative et/ou la pression positive.

6. Procédé selon l'une quelconque des revendications 1 à 5, **caractérisé en ce que** le moyen de nettoyage (1) ou une combinaison d'un certain nombre de moyens de nettoyage (1, 1') est déplacé(e) dans le tuyau de transport (100, 101) à partir de la position de départ sur la distance souhaitée dans une première direction et revient dans une seconde direction jusqu'à la position de départ ou au moins dans la direction de la position de départ.

7. Procédé selon l'une quelconque des revendications 1 à 6, **caractérisé en ce que** la distance de nettoyage du moyen de nettoyage (1) dans le tuyau de transport (100, 101) est limitée par un dispositif de frein (5) agissant sur le moyen de transmission (2) ou en limitant le déroulement du moyen de transmission (2) de la bobine (3).

8. Procédé selon l'une quelconque des revendications 1 à 7, **caractérisé en ce que** le déplacement du moyen de nettoyage (1) dans le tuyau de transport est facilité en agençant l'air de remplacement dans la section de tuyau (101) de la position de départ du moyen de nettoyage, dans l'espace entre sa partie d'extrémité de butée (7) et le moyen de nettoyage (1), lorsque le moyen de nettoyage s'éloigne de la position de départ ou en retirant l'air de ce dernier lorsque le moyen de nettoyage se rapproche de la position de départ, de la manière la plus appropriée via le conduit d'air de remplacement (102).

9. Procédé selon l'une quelconque des revendications 1 à 8, **caractérisé en ce que** le déplacement du moyen de nettoyage (1) est facilité en amenant l'air dans la section de tuyau (101) de la position de départ du moyen de nettoyage, dans l'espace entre sa partie d'extrémité de butée (7) et le moyen de nettoyage (1), en raccordant le côté de soufflage d'un dispositif de pompe (115) à ce dernier et en retirant l'air de l'espace entre la section de tuyau (101) de la position de départ, sa partie d'extrémité de butée (7) et le moyen de nettoyage (1) en raccordant le côté d'aspiration d'un dispositif de pompe (115) à ce dernier.

10. Procédé selon l'une quelconque des revendications 1 à 9, **caractérisé en ce que** le liquide de nettoyage (CL), en plus du moyen de nettoyage (1), est amené dans le tuyau de transport, lequel liquide de nettoyage est déplacé dans le tuyau de transport conjointement avec le moyen de nettoyage (1) ou le moyen de nettoyage (1, 1').

11. Procédé selon l'une quelconque des revendications 1 à 10, **caractérisé en ce que** le moyen de nettoyage (1, 1') et le liquide de nettoyage (CL) amené dans l'espace (V) entre la surface interne du tuyau de transport (100, 101) et le moyen de nettoyage, sont déplacés sous la forme d'une combinaison.

12. Procédé selon l'une quelconque des revendications 1 à 11, **caractérisé en ce que**, dans le procédé, des obstructions de tuyau éventuelles sont également supprimées avec le moyen de nettoyage (1).

13. Procédé selon l'une quelconque des revendications 1 à 12, **caractérisé en ce que** le moyen de nettoyage (1) est utilisé en tant que moyen de fermeture dans le tuyau de transport.

14. Appareil de nettoyage pour un tuyau de transport (100, 101) d'un système de transport de matériau pneumatique, tel qu'un système de transport de déchets, lequel appareil comprend au moins un moyen de nettoyage (1) destiné à être amené dans un tuyau de transport, lequel moyen de nettoyage est configuré pour se déplacer sous l'influence d'une différence de pression pour nettoyer un tuyau dans la section de tuyau de transport prévue pour être nettoyée et/ou pour transporter le matériau qui est dans le tuyau dans au moins une direction, moyennant quoi le moyen de nettoyage (1) est raccordé à un moyen de transmission (2) qui est configuré pour limiter ou guider le mouvement du moyen de nettoyage (1), **caractérisé en ce qu'**un conduit d'air de remplacement (16) est agencé dans le moyen de nettoyage (1), à travers le moyen de nettoyage (1), d'un premier côté à un second côté, de sorte que le moyen de nettoyage (1) est adapté pour conduire l'air de remplacement dans le tuyau de transport à travers le conduit d'air de remplacement (16) du moyen de nettoyage (1).

15. Appareil selon la revendication 14, **caractérisé en ce que** le moyen de transmission est agencé dans un dispositif de déplacement (3, 4), lequel dispositif de déplacement (3, 4) comprend au moins une bobine (3) et son dispositif d'entraînement (4).

16. Appareil selon la revendication 15, **caractérisé en ce que** le moyen de transmission (2) est un moyen de transmission, tel qu'un fil, une ligne, un câble ou similaire, destiné à être enroulé sur la bobine (3) et déchargé de la bobine (3).

17. Appareil selon l'une quelconque des revendications 14 à 16, **caractérisé en ce que** l'appareil comprend un dispositif de frein (5).

18. Appareil selon l'une quelconque des revendications 14 à 17, **caractérisé en ce que** l'appareil comprend un conduit d'air de remplacement (102), qui est prévu avec un moyen de valve (104) et agencé sur la section de tuyau (101) de la position de départ du moyen de nettoyage (1), dans une section entre sa partie d'extrémité de butée (7) et le moyen de nettoyage (1).

19. Appareil selon l'une quelconque des revendications 14 à 18, **caractérisé en ce que** l'appareil comprend un dispositif de pompe (115), dont le côté d'aspiration et/ou le côté de soufflage peut être raccordé à la section de tuyau (101) de la position de départ du moyen de nettoyage (1), dans une section entre sa partie d'extrémité de butée (7) et le moyen de nettoyage (1).

20. Appareil selon l'une quelconque des revendications 14 à 19, **caractérisé en ce qu'**il y a un certain nombre de moyens de nettoyage (1, 1') qui sont raccordés entre eux avec un moyen de couplage (2').

21. Appareil selon l'une quelconque des revendications 14 à 20, **caractérisé en ce que** l'appareil comprend un moyen pour amener le liquide de nettoyage (CL) dans le tuyau de transport, de préférence en raccordement avec le moyen de nettoyage (1) ou un certain nombre de moyens de nettoyage (1, 1').

22. Appareil selon l'une quelconque des revendications 14 à 21, **caractérisé en ce que** le moyen de nettoyage (1) est configuré pour fonctionner comme un moyen de fermeture dans le tuyau de transport.

23. Système de transport de matériau pneumatique, qui comprend un tuyau de transport, un moyen pour amener le matériau à transporter dans le tuyau de transport ainsi qu'un moyen pour obtenir une différence de pression dans le tuyau de transport, et un dispositif de séparation pour séparer le matériau de l'air de transport, **caractérisé en ce que** le système comprend un certain nombre de dispositifs de nettoyage, chacun desquels dispositifs de nettoyage, comprend au moins un moyen de nettoyage (1) à amener dans un tuyau de transport, lequel moyen de nettoyage est configuré pour se déplacer sous l'influence d'une différence de pression pour nettoyer un tuyau dans la section de tuyau de transport prévue pour être nettoyée, et/ou pour transporter le matériau qui est dans le tuyau dans au moins une direction, et **en ce que** le moyen de nettoyage (1) est raccordé à un moyen de transmission (2) qui est configuré pour limiter ou guider le déplacement du moyen de nettoyage (1) et **en ce que** les moyens de nettoyage (1(I), 1(II), 1(III), 1(IV)) d'un certain nombre de dispositifs de nettoyage sont configurés pour nettoyer le tuyau de transport (100, 100A, 100B) dans une séquence souhaitée (I, II, II, IV) et/ou pour transporter le matériau qui a été collecté dans la section de tuyau vers l'avant dans le tuyau de transport, de préférence vers un dispositif de séparation et **en ce qu'**un conduit d'air de remplacement (16) est agencé dans le moyen de nettoyage (1), de son premier côté à son second côté, de sorte que le moyen de nettoyage (1) est adapté pour conduire l'air de remplacement dans le tuyau de transport à travers le conduit d'air de remplacement (16) du moyen de nettoyage (1).

24. Système selon la revendication 23, **caractérisé en ce que**, dans le système, les distances de déplacement du moyen de nettoyage (1(I), 1(II), 1(III), 1(IV)) sont agencées de sorte que le mouvement de nettoyage, c'est-à-dire la distance de déplacement dans le tuyau de transport, du moyen de nettoyage (1(I), 1(II), 1(III)) de la précédente section de transport dans la séquence de nettoyage, s'étend toujours légèrement dans la section de tuyau du moyen de nettoyage du prochain dispositif de nettoyage (1(II), 1(III), 1(IV)) dans la séquence de nettoyage, à partir de laquelle section de tuyau, il nettoie/transporte le matériau vers l'avant.

25. Système selon la revendication 23 ou 24, **caractérisé en ce que** le moyen de transmission (2) du dispositif de nettoyage est agencé dans un dispositif de déplacement (3, 4), lequel dispositif de déplacement (3, 4) comprend au moins une bobine (3) et son dispositif d'entraînement (4).

26. Système selon la revendication 25, **caractérisé en ce que** le moyen de transmission (2) du dispositif de nettoyage est un moyen de transmission, tel qu'un fil, une ligne, un câble ou similaire, destiné à être enroulé sur la bobine (3) et déchargé de la bobine (3).

27. Système selon l'une quelconque des revendications 23 à 26, **caractérisé en ce que** dans le système, le moyen de nettoyage (1) est déplacé dans la direction de retour dans le tuyau en tirant avec le moyen de transmission (2) avec le dispositif de déplacement (3, 4) seul ou conjointement avec la pression négative et/ou la pression positive.

28. Système selon l'une quelconque des revendications 23 à 27, **caractérisé en ce que** l'appareil de nettoyage comprend un conduit d'air de remplacement (102), qui est prévu avec un moyen de valve (104) et agencé sur la section de tuyau (101) de la position de départ du moyen de nettoyage (1), dans une section entre sa partie d'extrémité de butée (7) et le moyen de nettoyage (1).

29. Système selon l'une quelconque des revendications 23 à 28, **caractérisé en ce que** l'appareil de nettoyage comprend un dispositif de pompe (115), dont le côté d'aspiration et/ou le côté de soufflage peuvent être raccordés à la section de tuyau (101) de la position de départ du moyen de nettoyage (1), dans une section entre sa partie d'extrémité de butée (7) et le moyen de nettoyage (1).

30. Système selon l'une quelconque des revendications 23 à 29, **caractérisé en ce qu'**il y a un certain nombre de moyens de nettoyage (1, 1') qui sont raccordés entre eux avec un moyen de couplage (2').

31. Système selon l'une quelconque des revendications 23 à 30, **caractérisé en ce que** l'appareil de nettoyage comprend un moyen pour amener le fluide de nettoyage (CL) dans le tuyau de transport, de préférence en raccordement avec le moyen de nettoyage (1) ou un certain nombre de moyens de nettoyage (1, 1').

32. Système selon l'une quelconque des revendications 23 à 31, **caractérisé en ce que**, dans le système, le moyen de nettoyage (1) est configuré pour fonctionner comme un moyen de fermeture dans le tuyau de transport.

33. Système selon l'une quelconque des revendications 23 à 32, **caractérisé en ce que** le déplacement du moyen de nettoyage (1) est ralenti en ralentissant le déplacement du moyen de transmission.
